# EUROPEAN PATENT APPLICATION

(11) **EP 4 668 124 A1**
(43) Date of publication of application: **24.12.2025**
(21) Application number: 24223169.4
(22) Date of filing: 24.12.2024
(51) Int. Cl.: G06F 16/16, G06F 16/182, H04N 1/21

(54) **INFORMATION PROCESSING SYSTEM, PROGRAM, AND INFORMATION PROCESSING METHOD**

(30) Priority: 21.06.2024 JP 2024100061
(71) Applicant: FUJIFILM Business Innovation Corp., Minato-ku Tokyo (JP)
(72) Inventor: INOMATA, Kohshiro, Yokohama-shi, Kanagawa (JP)
(74) Representative: Kurig, Thomas

(57) **Abstract**

An information processing system includes: a processor configured to: start generation of a file in response to a user operation on a first button displayed based on a web page; and set a file name of the file in a predetermined tag in the web page to make the file be in a state of being uploadable, in a case where an end of the generation of the file is detected.

## Description

### BACKGROUND OF THE INVENTION

### (i) Field of the Invention

The present invention relates to an information processing system, a program, and an information processing method.

### (ii) Description of Related Art

Uploading a file to a web server by using a web browser is generally executed. The specification of Hyper Text Markup Language (HTML) discloses a method of uploading a file by using a form tag. In this case, the user selects an existing file by selecting a file selection tag, and then the selected file is uploaded to the browser by selecting the transmission tag.

Uploading a file to a web server from a browser mounted on a multifunctional machine is performed. For example, JP2019-024187A, JP2012-205056A, and JP2005-149320A disclose a technique of changing the interpretation of a file selection tag in a case of displaying a web page with a browser mounted on a multifunctional machine, performing scan to generate a new file instead of selecting an existing file, and uploading a newly generated file with a transmission tag.

As a programming language that operates on a web browser, for example, JavaScript (registered trademark) is available. By using JavaScript, it is possible to add movement to a web page or control an operation of a button or the like. Therefore, in recent years, there is a tendency that the number of websites that create web pages by combining HTML and JavaScript has increased.

In addition, with the development of a programming language (referred to as a "script language" below) that operates on a web browser typified by JavaScript, it has become possible to upload a file by a script language at a timing when the file is selected in HTML without using a form tag of HTML. By using these techniques, it is possible to perform a one-stage operation of file selection (that is, one button operation by the user) instead of a two-stage user operation (that is, two button operations by the user) of file selection and transmission selection in the related art, and it is possible to improve the operability of the user.

### SUMMARY OF THE INVENTION

In a case where a file is newly generated and uploaded in response to the user selecting the file selection tag as in the web browser of the multifunctional machine described above, a timing of setting the file name to HTML is important. Unlike the case of setting an already existing file, since a new file is generated after a file selection tag is selected, even in a case where a file is uploaded by one button operation by the user or the file is uploaded by two button operations by the user, in a case where the file name is set in HTML before the file generation is ended, a non-existent file or an incomplete file is uploaded.

An object of the present invention is to provide to avoid uploading of a file in an unfinished state in a case where the file newly generated in response to a user operation on a predetermined button displayed based on a web page is uploaded.

According to an aspect of the present disclosure, there is provided an information processing system including: a processor configured to: start generation of a file in response to a user operation on a first button displayed based on a web page; and set a file name of the file in a predetermined tag in the web page to make the file be in a state of being uploadable, in a case where an end of the generation of the file is detected.

The uploading of the file may be started in response to a user operation on a second button displayed based on the web page after the file name of the file is set in the predetermined tag.

The processor may be configured to display a message indicating that the file has not yet been generated, together with the second button, during a period in which the generation of the file has not yet been ended.

The processor may be configured to superimpose and display an opaque display element on at least a display portion of the second button on a display screen during a period in which the generation of the file has not yet been ended.

The processor may be configured to receive a user operation on a display region other than the opaque display element on the display screen during the period in which the generation of the file has not yet been ended.

The uploading of the file may be automatically started in accordance with the setting of the file name of the file in the predetermined tag.

The processor may be configured to detect an end of the uploading by monitoring an execution state of the automatically started uploading.

The processor may be configured to acquire notifications of a start and an end of the uploading executed with the setting of the file name of the file in the predetermined tag from a web browser that processes the web page.

According to an aspect of the present disclosure, there is provided a program causing a computer to realize: a function of starting generation of a file in response to a user operation on a first button displayed based on a web page; and a function of setting a file name of the file in a predetermined tag in the web page to make the file be in a state of being uploadable, in a case where an end of the generation of the file is detected.

[0017-1] According to an aspect of the present disclosure, there is provided an information processing method including: starting generation of a file in response to a user operation on a first button displayed based on a web page; and setting a file name of the file in a predetermined tag in the web page to make the file be in a state of being uploadable, in a case where an end of the generation of the file is detected.

According to a first aspect of the present disclosure, it is possible to avoid uploading of a file in an unfinished state in a case where the file newly generated in response to a user operation on a predetermined button displayed based on a web page is uploaded.

According to a second aspect of the present invention, the user can start the file upload by himself/herself.

According to a third aspect of the present invention, the user can be prevented from operating the second button.

According to a fourth aspect of the present invention, when the file generation is not yet ended, it is possible to make the second button invisible so that it is not operated.

According to a fifth aspect of the present invention, when the second button cannot be operated, it is possible to allow the user to perform other operations on the display screen.

According to a sixth aspect of the present invention, the user does not need to perform any operations to upload a file.

According to a seventh aspect of the present invention, it is possible to detect the end of uploading by itself without receiving notifications from others.

According to an eighth aspect of the present invention, it is possible to detect a start and an end of an upload that is automatically started.

According to a ninth aspect of the present disclosure, it is possible to avoid uploading of a file in an unfinished state in a case where the file newly generated in response to a user operation on a predetermined button displayed based on a web page is uploaded.

[0026-1] According to a tenth aspect of the present disclosure, it is possible to avoid uploading of a file in an unfinished state in a case where the file newly generated in response to a user operation on a predetermined button displayed based on a web page is uploaded.

### BRIEF DESCRIPTION OF THE DRAWINGS

Exemplary embodiment(s) of the present invention will be described in detail based on the following figures, wherein:
Fig. 1 is a diagram showing an overall configuration of a Web service system and a block configuration of a multifunctional machine in a first exemplary embodiment;
Fig. 2A is a sequence diagram showing a series of processes of generating and uploading scan data in the first exemplary embodiment;
Fig. 2B is a sequence diagram following Fig. 2A;
Fig. 3A is a diagram showing an example of a home screen displayed on an operation panel in the first exemplary embodiment;
Fig. 3B is a diagram showing an example of a main screen of a cloud service displayed on the operation panel in the first exemplary embodiment;
Fig. 3C is a diagram showing an example of a submenu screen displayed on the operation panel in the first exemplary embodiment;
Fig. 3D is a diagram showing an example of a scan parameter setting screen displayed on the operation panel in the first exemplary embodiment;
Fig. 3E is a diagram showing an example of an in-processing screen displayed on the operation panel in the first exemplary embodiment;
Fig. 3F is a diagram showing an example of a file generation completion screen displayed on the operation panel in the first exemplary embodiment;
Fig. 3G is a diagram showing an example of a main screen displayed on the operation panel after an uploading process is ended, in the first exemplary embodiment;
Fig. 4A is a sequence diagram showing a series of processes of generating and uploading scan data in a second exemplary embodiment;
Fig. 4B is a sequence diagram following Fig. 4A;
Fig. 5A is a diagram showing an example of a submenu screen displayed on the operation panel in a third exemplary embodiment;
Fig. 5B is a diagram showing an example of a scan parameter setting screen displayed on the operation panel in the third exemplary embodiment;
Fig. 5C is a diagram showing an example of the submenu screen displayed on the operation panel after a scan process is ended, in the third exemplary embodiment;
Fig. 5D is a diagram showing an example of an in-uploading screen displayed on the operation panel in the third exemplary embodiment;
Fig. 5E is a diagram showing an example of an upload end screen displayed on the operation panel in a fourth exemplary embodiment;
Fig. 6A is a sequence diagram showing a series of processes of generating and uploading scan data in the third exemplary embodiment;
Fig. 6B is a sequence diagram following Fig. 6A;
Fig. 7A is a diagram showing an example of a user information transmission screen displayed on the operation panel in a modification example of the third exemplary embodiment;
Fig. 7B is a diagram showing an example of a user information transmission screen in a case where user information is being input in the third exemplary embodiment; and
Fig. 7C is a diagram showing an example of the user information transmission screen in a state where a file is uploadable in the third exemplary embodiment.

### DETAILED DESCRIPTION OF THE INVENTION

Hereinafter, exemplary embodiments of the present invention will be described with reference to the drawings.

### First Exemplary Embodiment

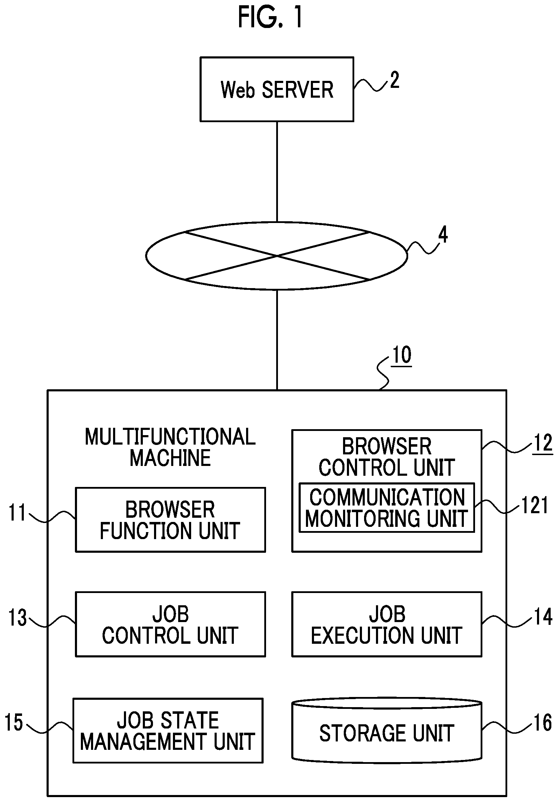

Fig. 1 is a diagram showing an overall configuration of a Web service system and a block configuration of a multifunctional machine 10 in the present exemplary embodiment. Fig. 1 shows a configuration in which a Web server 2 and the multifunctional machine 10 are connected via a network 4 such as the Internet. The Web server 2 is a server computer that provides a Web service to the multifunctional machine 10 as a client. The multifunctional machine 10 is an example of an information processing system that uses the Web service provided by the Web server 2. Although one or more Web servers 2 and one or more multifunctional machines 10 may be present, since each of the Web server 2 and the multifunctional machine 10 need only have processing functions described below, one Web server 2 and one multifunctional machine 10 are shown in Fig. 1.

The multifunctional machine 10 is an aspect of an image forming apparatus that incorporates various functions such as a printing function, a copying function, and a scanner function, and incorporates a computer. In the present exemplary embodiment, the multifunctional machine 10 can be realized by the same components as in the related art as the apparatus configuration. That is, the multifunctional machine 10 includes at least a ROM, a RAM, an HDD as a storage unit, an operation panel as a user interface, various mechanisms for realizing functions mounted on the multifunctional machine 10, such as a scanner and a printer, a network interface that is connected to the network 4 and transmits and receives data to and from the Web server 2, and the like.

In addition, as shown in Fig. 1, the multifunctional machine 10 includes a browser function unit 11, a browser control unit 12, a job control unit 13, a job execution unit 14, a job state management unit 15, and a storage unit 16. In addition, components that are not used for the description of the present exemplary embodiment are not shown in the drawings.

The browser function unit 11 executes a web browser (also simply referred to as a "browser" below) mounted on the multifunctional machine 10 to execute various processes based on a browser function as described below. The browser control unit 12 controls the execution of the browser by the browser function unit 11. A communication monitoring unit 121 in the browser control unit 12 monitors a communication process in the web browser. More specifically, the communication monitoring unit 121 detects the end of an uploading process of scan data by monitoring data communication between the browser function unit 11 and the Web server 2.

The job execution unit 14 executes various jobs in response to a request from a user who operates the operation panel. For example, in a case where scan is requested, the job execution unit 14 reads a document set on a document table of the multifunctional machine 10 and generates read image data (also referred to as "scan data" below). The job control unit 13 controls the execution of the job executed by the job execution unit 14. The job state management unit 15 manages an execution state of a job executed by the job execution unit 14. For example, the job state management unit 15 monitors an execution state from the start of execution of the job to the end of the execution of the job, and records the execution content in logs in a case where the execution of the job is completed. The storage unit 16 stores scan data and a log file.

Each of the components 11 to 15 in the multifunctional machine 10 is realized by a cooperative operation of the computer mounted on the multifunctional machine 10 and a program operated by a CPU mounted on the computer. Further, the storage unit 16 is realized by an HDD mounted on the multifunctional machine 10. Alternatively, the RAM or an external storage unit may be used via the network.

Further, the program used in the present exemplary embodiment may be not only provided by a communication unit but also provided by storing the program in a computer readable recording medium such as a USB memory. The program provided from the communication unit or the recording medium is installed in the computer, and various types of processing are realized by sequentially executing the program by the CPU of the computer.

In addition, the multifunctional machine 10 constituting the information processing system is shown as a single apparatus, but may be realized by combining a plurality of computers or apparatuses.

A web page handled in the present exemplary embodiment is created by combining HTML and JavaScript as an example of a language other than HTML. In the web page handled in the present exemplary embodiment, at least a file selection tag is described as a predetermined tag in HTML. The file selection tag is described in a format of type = "file" of an input tag. In the present exemplary embodiment, the interpretation of the file selection tag is changed, and scan is executed instead of the file selection. In addition, in a case where JavaScript detects that a file name is set in the file selection tag, JavaScript automatically starts uploading.

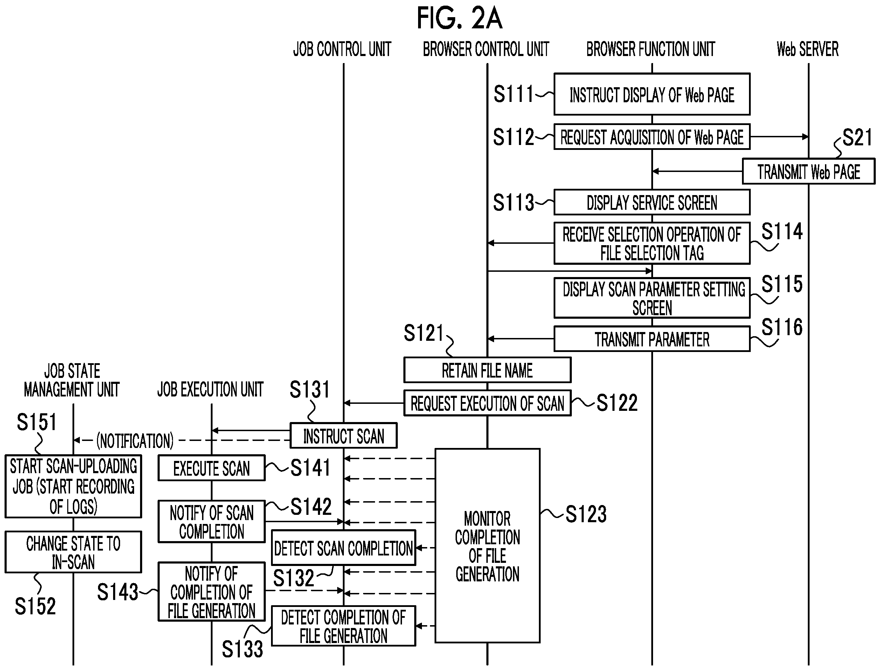

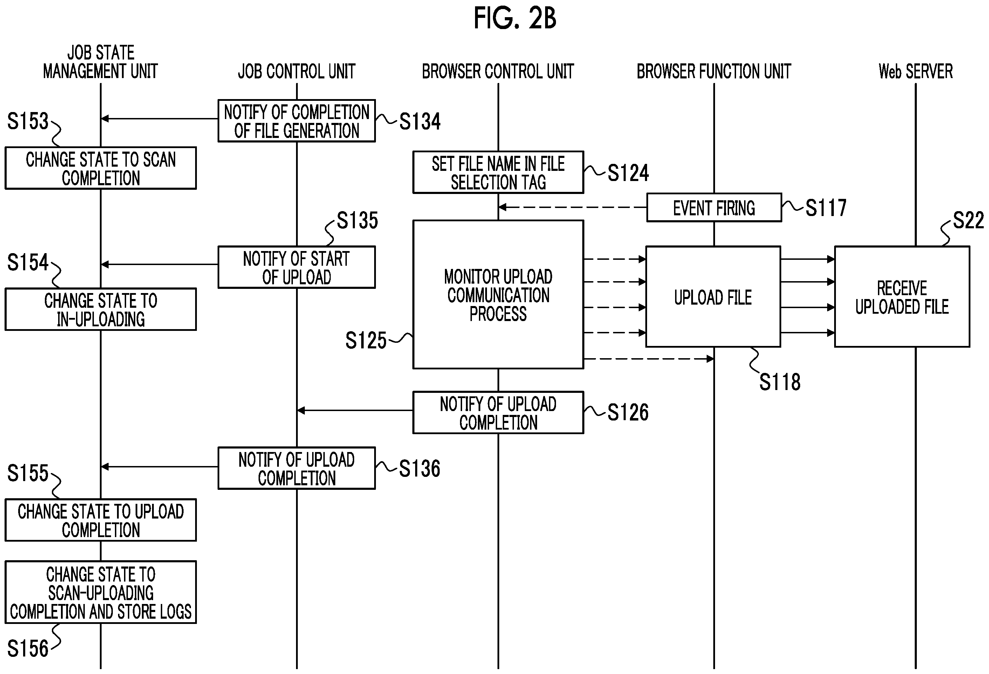

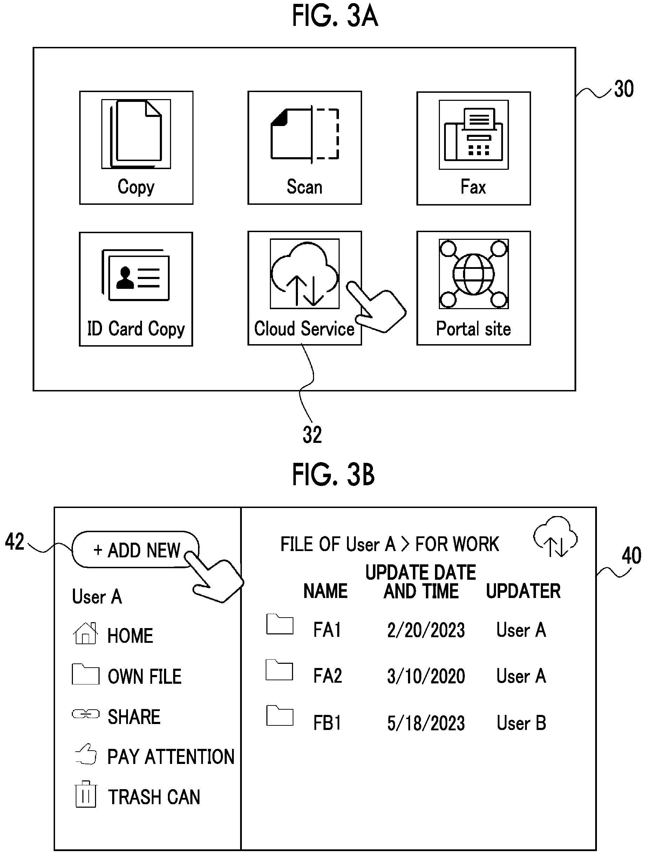

Next, an operation of the present exemplary embodiment will be described. In the present exemplary embodiment, a case where a user scans a document using the multifunctional machine 10 and uploads a file of the scan data to the Web server 2 will be described as an example. In a case where the user selects a file selection tag from a Web page displayed in a case where the user selects uploading of a file, the multifunctional machine 10 in the present exemplary embodiment processes scan-uploading instead of the file selection. A series of processes of uploading the file from the display of the Web page will be described with reference to sequence diagrams shown in Figs. 2A and 2B and screen transitions shown in Figs. 3A to 3G.

First, the user selects a button 32 of a cloud service from a home screen 30 displayed on the operation panel of the multifunctional machine 10 shown in Fig. 3A in order to upload the file of the scan data. Fig. 3B shows an example of a main screen 40 of the cloud service displayed on the operation panel by the button selection. In the present exemplary embodiment, identification information of the user who logs in to the multifunctional machine 10 and uses the multifunctional machine 10 is set as "User A".

In a case where the button 32 of the cloud service is selected from the home screen 30, and the browser function unit 11 of the multifunctional machine 10 receives a display instruction of the Web page from the user (Step S111), the browser function unit 11 transmits an acquisition request of the Web page to the Web server 2 (Step S112).

The Web server 2 transmits a web page for displaying the service screen 40 to the multifunctional machine 10 in response to the request from the multifunctional machine 10 (Step S21).

The browser function unit 11 in the multifunctional machine 10 acquires the Web page corresponding to the cloud service acquired from the Web server 2 as described above, and displays the main screen (also referred to as the "service screen" below) 40 of the cloud service shown in Fig. 3B on the operation panel (Step S113).

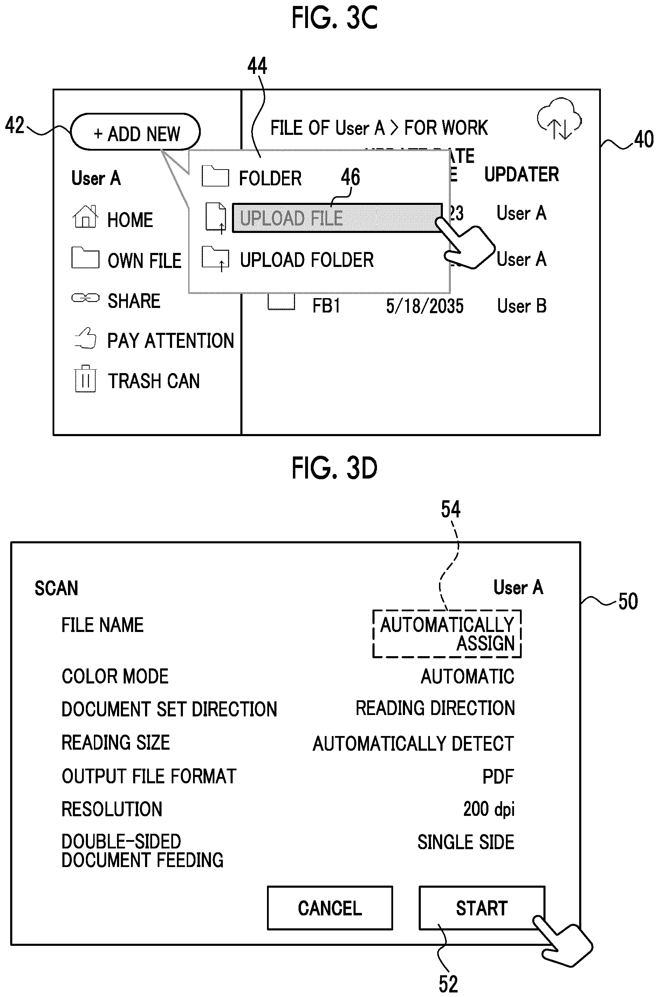

Subsequently, Fig. 3C shows an example of a submenu screen 44 displayed by the user selecting a "+add new" button 42 on the service screen 40. The submenu screen 44 is superimposed and displayed on the service screen 40 as shown in Fig. 3C, and displays a list of new additional functions provided in the cloud service. The user selects a "file upload" button 46 as a target from the submenu screen 44. The button 46 corresponds to an <input type=file> tag (also referred to as a "file selection tag" below) included in the above-described Web page, and the selection of the button 46 is a selection operation of the file selection tag. As described above, in a case where the file selection tag is selected by the user, the browser function unit 11 receives the selection operation (Step S114).

The browser control unit 12 normally displays a file selection screen in response to the selection of the file selection tag. However, in the present exemplary embodiment, the browser control unit 12 receives the user operation as a scan instruction and displays a scan parameter setting screen on the browser function unit 11 in response to the user operation. The browser function unit 11 displays the scan parameter setting screen in response to an instruction from the browser control unit 12 (Step S115). Fig. 3D shows an example of a scan parameter setting screen 50 displayed on the operation panel in this manner.

The user sets an intended parameter from the scan parameter setting screen 50 and then selects a start button 52. The user may set the file name of the file generated by scan, but an example of a case where a function of automatically assigning the file name by the multifunctional machine 10 is selected to be used is shown as indicated by a broken line 54.

In Fig. 3D, an example in which the user sets the intended parameter has been described, but the present invention is not limited thereto. For example, the scan process may be automatically started without displaying Fig. 3D with the initially set parameters. In addition, a predetermined parameter may be acquired from an external server, and the scan process may be started with the predetermined parameter.

In a case where the start button 52 is selected by the user, the browser function unit 11 transmits the selected parameter to the browser control unit 12 (Step S116). However, in a case where "automatically assign" is selected for the file name as in the example here, the browser function unit 11 generates the file name in accordance with a predetermined rule and includes the file name in the parameter to be passed to the browser control unit 12.

The predetermined rule for naming the file name is not a characteristic of the present exemplary embodiment. In the present exemplary embodiment, for example, the naming is performed including the date and time such as the date and time of naming or the date and time of completion of file generation.

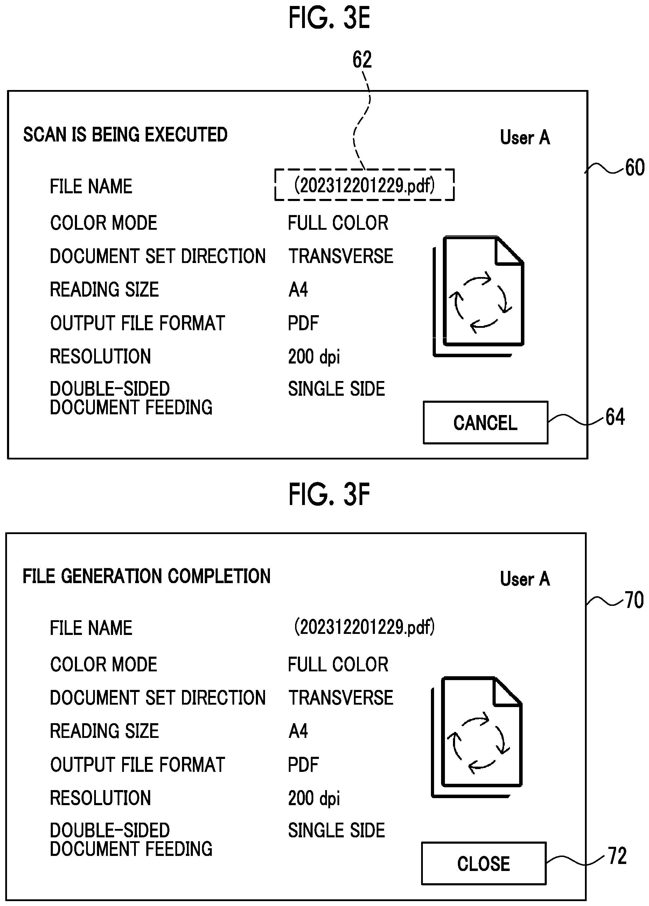

As described above, in this manner, the user operation required to execute an upload function of a file is ended. Thereafter, the browser function unit 11 may display, on the operation panel, an in-processing screen 60 as shown in Fig. 3E to notify that the scan instruction is normally received by the user and the scan process is started. In the in-processing screen 60, the automatically assigned file name is displayed as shown by a broken line 62. In this case, for example, as shown in Fig. 3E, parentheses may be added so that it can be distinguished that naming is performed by automatically assigning the file name from a case where the file name is not automatically assigned. In addition, in a case where the file of the scan data is not yet generated, a display form different from other parameters, for example, text of the file name may be displayed in gray to indicate that the file is not yet generated. The browser function unit 11 may continue to display the in-processing screen 60 on the operation panel until a file uploading process is completed or until a cancel button 64 is selected by the user.

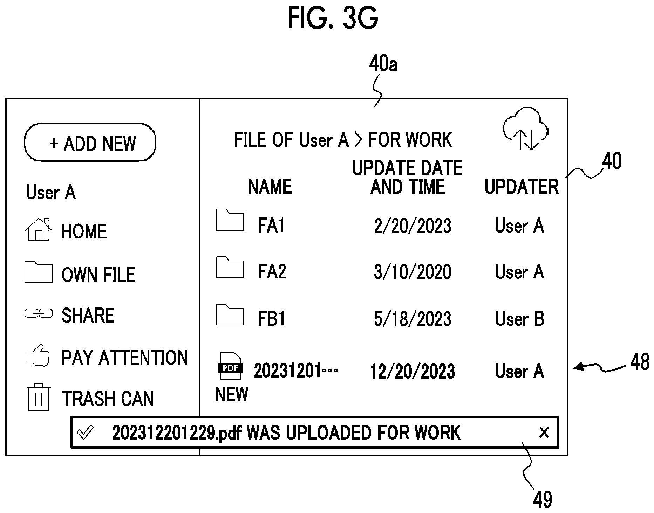

In a case where the file generation is completed, the transition may be made to a file generation completion screen 70 as shown in Fig. 3F. In addition, the user who knows completion of the file generation by the display of the file generation completion screen 70 may select a close button 72 to display the service screen 40. Fig. 3G shows a display example of the service screen 40 displayed after the process ends.

In a case where the browser control unit 12 receives the scan parameter transmitted from the browser function unit 11 together with the notification of an instruction to start scan, the browser control unit 12 retains the file name of the scan data included in the scan parameter (Step S121). That is, since the file name of the scan data is included in the scan parameter transmitted from the browser function unit 11, the browser control unit 12 retains the file name inside without setting the browser function unit 11 to set the file name in the file selection tag at this stage, although the file name is set before the execution of the scan. Then, the browser control unit 12 transmits the scan parameter to the job control unit 13 to request the execution of the scan (Step S122). The file name may be retained after the execution request of the scan.

Thereafter, the browser control unit 12 monitors the operation of the job control unit 13. More specifically, the browser control unit 12 monitors the execution of the scan process in order to know whether or not the generation of the file of the scan data is completed by the scan process (Step S123).

The job control unit 13 instructs the job execution unit 14 to execute the scan in response to the scan execution request from the browser control unit 12 (Step S131).

In the present exemplary embodiment, the execution of the job is recorded in the logs. Thus, the job control unit 13 notifies the job state management unit 15 that the scan job is executed, together with the scan execution instruction for the job execution unit 14. As a result, the job execution unit 14 executes the scan process in accordance with the scan parameter transmitted in a case of the execution instruction (Step S141). Since the file of the scan data is generated by the scan process executed in response to the instruction, the scan process corresponds to a file generation process. On the other hand, the job state management unit 15 receives the notification from the job control unit 13, and starts recording the logs in response to the start of the job (a "scan-uploading job" below) of the scan process and the uploading process of the file generated by scan (Step S151). In a case of initial setting of the logs, the job state management unit 15 sets the scan-uploading job to a state where scan is started. Then, the job state management unit 15 changes the state of the job from the start of scan to the in-scan, as the state of the scan-uploading job (Step S152).

In a case where the scan started as described above is completed, the job execution unit 14 notifies the job control unit 13 that the scan is completed (Step S142). The job control unit 13 detects that the scan is completed by receiving the notification from the job execution unit 14 (Step S132). The browser control unit 12 that monitors the operation of the job control unit 13 also knows the completion of scan in the same manner.

Subsequently, the job execution unit 14 generates a file for storing the read image data generated by scan, but in a case where the generation of the file is completed, the job control unit 13 is notified that the generation of the file is completed (Step S143).

In the present exemplary embodiment, the file name of the file generated by the scan process is set in advance from the scan parameter setting screen 50 shown in Fig. 3D. However, in a case where the file name is not set, the job control unit 13 may inquire the user of the file name in a case where the end of the execution of the scan process by the job execution unit 14 is detected, and may acquire the file name in response to the inquiry. The file name acquired in this manner is set in the file selection tag by a process described below.

The job control unit 13 detects that the generation of the file is completed, by receiving the notification from the job execution unit 14 (Step S133). In a case where the job control unit 13 detects the completion of the file generation, the job control unit 13 notifies the job state management unit 15 that the file generation is completed (Step S134). The job state management unit 15 changes the state of the scan-uploading j ob from in-scan to scan completion in response to the notification of the completion of the generation of the file (Step S153). Then, the job control unit 13 notifies the job state management unit 15 of the start of execution of the subsequent uploading process (Step S135). The job state management unit 15 changes the state of the scan-uploading job from the scan completion to in-uploading (Step S154).

On the other hand, the browser control unit 12 detects the completion of the generation of the file by monitoring the operation of the job control unit 13. In the present exemplary embodiment, the browser control unit 12 monitors the operation of the job control unit 13 in Step S123, and thus, the browser control unit 12 knows the completion of the generation of the file of the scan data. However, for example, the job control unit 13 may notify the browser control unit 12 of the job state management unit 15 in Step S134.

The browser control unit 12 sets the file name of the scan data retained in the file selection tag by detecting the completion of the generation of the file (Step S124). In the present exemplary embodiment, even in a case where the file name of the file of the scan data is set at any time, the file name of the scan data is set to the file selection tag after the generation of the file is completed.

Subsequently, the communication monitoring unit 121 in the browser control unit 12 starts monitoring the communication by the uploading process after the file name is set (Step S125). Strictly speaking, a file path may be set to the file selection tag, but in the present exemplary embodiment, for convenience, the description will be made assuming that the "file name" is set.

On the other hand, in a case where the file name is set in the file selection tag, and thus JavaScript that is described as a portion of the Web page and implements the upload function detects that the file name is set in the file selection tag (corresponding to event firing (Step S117) in Fig. 2B), and automatically starts the uploading process of the scan data corresponding to the set file name (Step S118).

Then, the Web server 2 receives the file uploaded by the browser function unit 11 (Step S22).

By the way, in a case where file uploading is performed by using a two-stage user operation of file selection and transmission selection in the related art, for example, the file selection tag as the file selection and submit of a form tag as the transmission selection, a page transition of the browser occurs, and the file uploading is also completed with the completion of the page transition. Therefore, it is possible to detect the completion of the file uploading by monitoring the page transition state of the normal browser.

In a case of a one-stage operation of uploading a file by a script language operating on a browser compared with the above-described two-stage operation, for example, in a case where uploading is completed by a one-stage operation of file selection by using a script language such as JavaScript, the page transition does not occur in the browser, and thus it is not possible to detect the upload state from the page transition state. For example, since Fig. 3B and Fig. 3G have the identical URL, it is not possible to detect the upload state from the page transition state.

Therefore, in the present exemplary embodiment, the communication monitoring unit 121 is provided in the browser control unit 12, and a process (Step S125) of monitoring communication between the browser and the Web server 2 after the browser control unit 12 sets the file name in the file selection tag is added. Then, it is determined that uploading is being performed after the communication is started, and it is determined that the uploading process is ended in a case where the communication is stopped. In a case where the end of the uploading process can be detected, the logs of the scan-uploading job can be recorded as described later, and the display control of the operation panel can also be used.

The browser control unit 12 detects the end of the uploading process by monitoring the state of communication in the uploading process as described above. For example, after a file is set in an HTML tag, post-communication in HTTP between the browser function unit and the currently displayed Web server is monitored.

Incidentally, in order to detect the end of the uploading process, the communication monitoring unit 121 only need to start monitoring at least until the uploading process ends. Since an end timing of the uploading process is indefinite, the monitoring is basically started before and after the start of the execution of the uploading process. That is, in Fig. 2B, the setting of the file name is shown first, but the monitoring of the communication may be started first.

As described above, in a case where the communication monitoring unit 121 detects the end of uploading of the scan data, the browser control unit 12 notifies the job control unit 13 of the completion of the uploading (Step S126).

In a case where the notification of the completion of the uploading is received, the job control unit 13 notifies the job state management unit 15 that the uploading is completed (Step S136). In a case where the notification of the completion of the uploading is received, the job state management unit 15 changes the state of the scan-uploading job from the in-uploading to the upload completion (Step S155). In addition, since the scan-uploading job is ended with the completion of the uploading, the state of the scan-uploading job is changed from the completion of the uploading to the completion of the uploading of the scan-uploading job, and the recording contents in the logs are stored (Step S156).

As shown in Fig. 3G, in a display region 40a on the right side of the service screen 40, a list of files stored in a folder (in Fig. 3G, "for work") prepared and selected for the user (User A) in the Web server 2 is displayed. As in the display example shown in Fig. 3G, a file 48 newly stored by the current uploading is added to the list of files.

Then, the browser function unit 11 may separately display a message 49 indicating that a file has been added, in the display region 40a as shown in Fig. 3G. The message 49 is described as a portion of, for example, a Web page and is displayed by JavaScript that implements the upload function.

As described above, according to the present exemplary embodiment, even in a case where the file selection tag is selected by the user, the file name is set in the file selection tag in response to detection of the end of the generation of the file of the scan data as an uploading target. As a result, even in a case where the uploading is automatically started by the one-stage operation, it is possible to prevent uploading of a file in a state of being non-existent or being incomplete.

By the way, as described above, in a case where the Web page is described only in HTML, and the uploading process ends, the screen display on the operation panel transitions to a screen for notifying the user of the end of the uploading process. However, in a case where the uploading process is executed by the description of JavaScript, JavaScript does not detect the end of the uploading process, and thus the screen display on the operation panel does not transition to another screen even though the uploading process is ended. In addition, the operation panel is provided with buttons such as a home button, and these buttons are in an operable state. Thus, even though the Web browser that displays the Web page, in other words, the Web browser that executes the uploading process uses the operation panel, in a case where a user operation such as the home button that switches the display screen is performed, the Web browser is forcibly ended. That is, in a case where the Web browser is executing the uploading process when the button operation is performed by the user, the uploading process is ended halfway.

Therefore, in the present exemplary embodiment, the control is performed such that the web browser that executes the uploading process is not ended as follows.

First, when the uploading process is being executed, the browser control unit 12 displays that the uploading process is being executed on the operation panel, and controls input and output on the operation panel so as not to receive a user operation on the operation panel. Alternatively, the user can know that the scan data is being uploaded, by displaying a message indicating that the uploading process is being executed, for example, on the operation panel. Alternatively, a message indicating that the user operation on the operation panel is not received because the uploading process is being executed may be displayed on the operation panel. In addition, even though the user operates the operation panel, control is performed such that the operation is not received. Thus, the web browser that is executing the uploading process is not required to be ended.

In addition, in a case where the user operation on the operation panel is detected, the browser control unit 12 may assign a dedicated window to the uploading process to continue the execution and set the operation panel to be in an operable state. The dedicated window is assigned to the Web browser that is executing the uploading process, whereby the window is separated from the operation panel and the execution is continuously performed in the background. As a result, the multifunctional machine 10 may respond to the user operation on the operation panel, and may maintain the execution state of the uploading process without being affected by the user operation even though the user operation is performed. The message indicating that the uploading process is being executed may or may not be displayed.

By the way, in the above description, the dedicated window is assigned to the uploading process in response to the detection of the user operation on the operation panel, but the dedicated window may be automatically assigned in a case of starting the execution of the uploading process, so that the uploading process may be controlled to be executed in the background from an execution start time point of the uploading process. In this case, the browser control unit 12 makes the operation panel be in an operable state, from the execution start time point of the uploading process.

### Second Exemplary Embodiment

The button 46 shown in Fig. 3C is displayed as a first button based on the file selection tag (<input type=file> tag) included in the Web page. In a case where the user operation is performed on the button 46, the generation of the file is started in accordance with the user operation. Then, in a case where the end of the generation of the file is detected, the browser control unit 12 sets the file name of the file in the file selection tag (more specifically, "file"). As a result, the file is made to be in an uploadable state. As described in the first exemplary embodiment, in a case of a one-stage operation of uploading a file by a script language that operates on a browser, the file uploading is automatically started in accordance with setting of a file name in the file selection tag.

However, in the one-stage user operation, unlike the case of the two-stage user operation, it is not possible to detect the end of the file uploading. Thus, in the first exemplary embodiment, as shown in Fig. 1, the communication monitoring unit 121 is provided to monitor the execution state of the automatically started uploading. As a result, the browser control unit 12 can detect the end of the uploading.

By the way, the multifunctional machine 10 may upload not only the file generated by scan but also the file transmitted via the network. That is, the browser function unit 11 may execute a plurality of uploads based on HTTP post communication simultaneously and in parallel in response to a plurality of requests. In this case, since the communication monitoring unit 121 in the first exemplary embodiment performs processing to monitor post-communication in the browser, it is not possible to specify the upload as a monitoring target, that is, the upload of the file generated by scan from the uploads based on the post-communication performed simultaneously and in parallel.

Therefore, in the present exemplary embodiment, the browser function unit 11 is provided with a function of specifying the upload as the monitoring target and notifying the browser control unit 12 of the start and end of the upload.

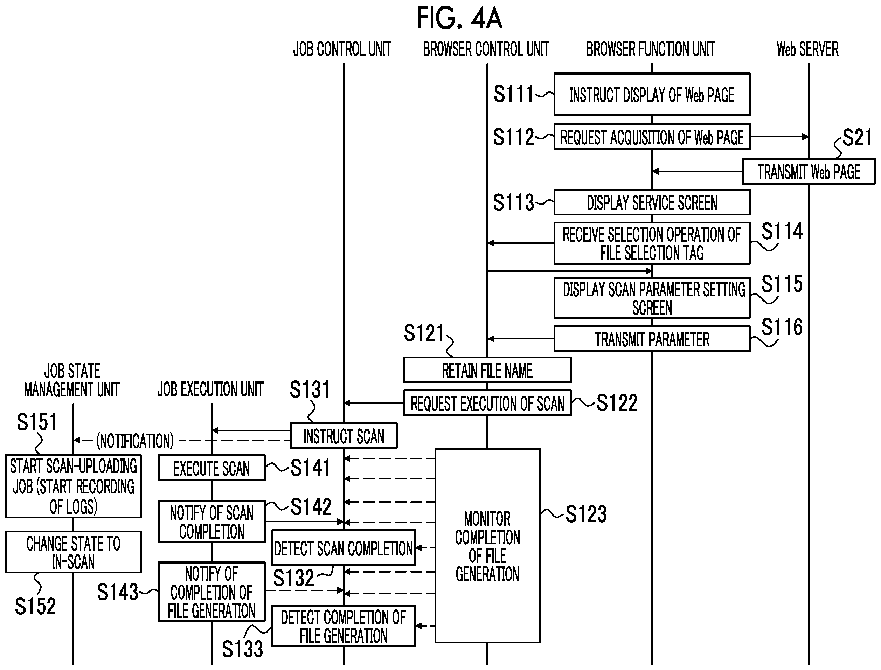

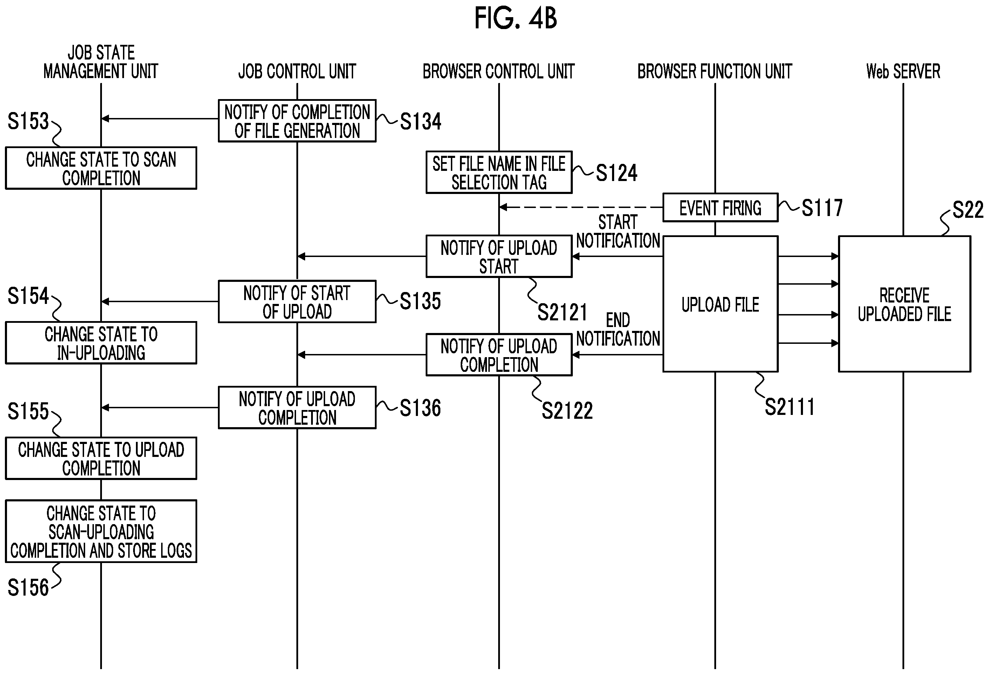

The block configuration (Fig. 1) of the system and the screen transition (Figs. 3A to 3G) in a case of generating a file by scan and uploading the file in the present exemplary embodiment may be the same as in the first exemplary embodiment. In the present exemplary embodiment, a series of processes of uploading the file from the display of the Web page will be described below with reference to sequence diagrams shown in Figs. 4A and 4B. In Figs. 4A and 4B, the same process as in Figs. 2A and 2B is given the same step number, and the description thereof will be omitted as appropriate. Fig. 2A and Fig. 4A are the same drawings.

As shown in Fig. 4B, a process (Step S117) of setting a file name of scan data to a file selection tag by the browser control unit 12 (Step S124) and detecting that the file name is set in the file selection tag by JavaScript in the browser function unit 11 may be the same as in the first exemplary embodiment.

In the browser function unit 11 in the present exemplary embodiment, the upload is automatically started by the script language as described above in response to the setting of the file name in the file selection tag. Since the execution of the script language is realized by the browser function unit 11, the browser function unit 11 can detect the start and the end of the communication realized by the script language. In the present exemplary embodiment, in a case where the communication using the script language, for example, the post method of XmlHttpRequest of JavaScript is executed and ended, the browser control unit 12 is notified that the communication is performed (Step S2111).

That is, in a case where the browser control unit 12 receives a notification of the start of the upload from the browser function unit 11, the browser control unit 12 notifies the job control unit 13 of the start of the upload (Step S2121). In addition, in a case where the browser control unit 12 receives a notification of the end of the upload from the browser function unit 11, the browser control unit 12 notifies the job control unit 13 of the end of the upload (Step S2122).

According to the present exemplary embodiment, it is possible to detect the start and the end of the upload of the file generated by the scan without confusing the upload of the file generated by the scan and the other uploads. In addition, in the present exemplary embodiment, since the communication monitoring unit 121 is not provided as in the first exemplary embodiment and the communication monitoring is not performed, it is possible to reduce the CPU load due to the communication monitoring.

### Third Exemplary Embodiment

In the present exemplary embodiment, a file may be uploaded by a two-stage operation by the user. In the one-stage operation, as described in the first and second exemplary embodiments, the upload is automatically started in response to one user operation on the first button displayed based on the file selection tag (<input type=file> tag) included in the Web page. On the other hand, in the two-stage operation, the user operation on the file selection tag is only to set the file name for the file generated by scan. In the two-stage operation, the upload is started in response to a user operation (that is, two button operations) on a second button displayed based on a transmission tag (<input type=submit> tag).

In the one-stage operation, the generation of the file is started by scan by operating the first button. However, in the first and second exemplary embodiments, the file name is set in the file selection tag after the generation of the file is ended. Thus, the automatic start of the upload before the generation of the file is ended is prevented.

In the two-stage operation, in a case where the second button on the display screen displayed together with the first button is hidden by superimposing and displaying another screen (page, window, or the like) after the operation of the first button during a period from the operation on the first button until the generation of the file generated by the scan is ended and the file name is set in the file selection tag, the second button does not need to be operated by the user. In JP2019-024187A that employs the two-stage operation, the operation on the second button before the scan is ended is blocked by hiding the entire screen including the second button with another screen.

However, although the operation on the second button can be blocked by hiding the entire screen, the operation on a region other than the second button is also blocked.

In the present exemplary embodiment, even in a case where the second button displayed based on the transmission tag is not hidden during a period in which the generation of the file is not ended, the file is made not uploaded in an unfinished state.

The block configuration (Fig. 1) of the system in the present exemplary embodiment may be the same as that in the first exemplary embodiment. In a case where the file is uploaded by the two-stage operation, the communication monitoring function by the communication monitoring unit 121 is not necessary, but by providing the communication monitoring unit 121, it is possible to handle both the web page for the one-stage operation and the web page for the two-stage operation.

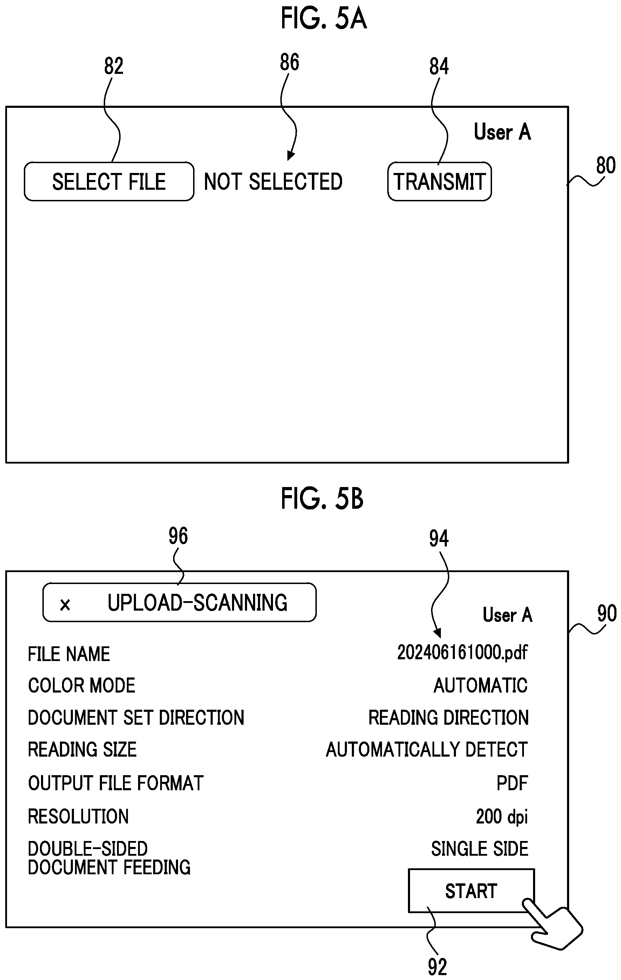

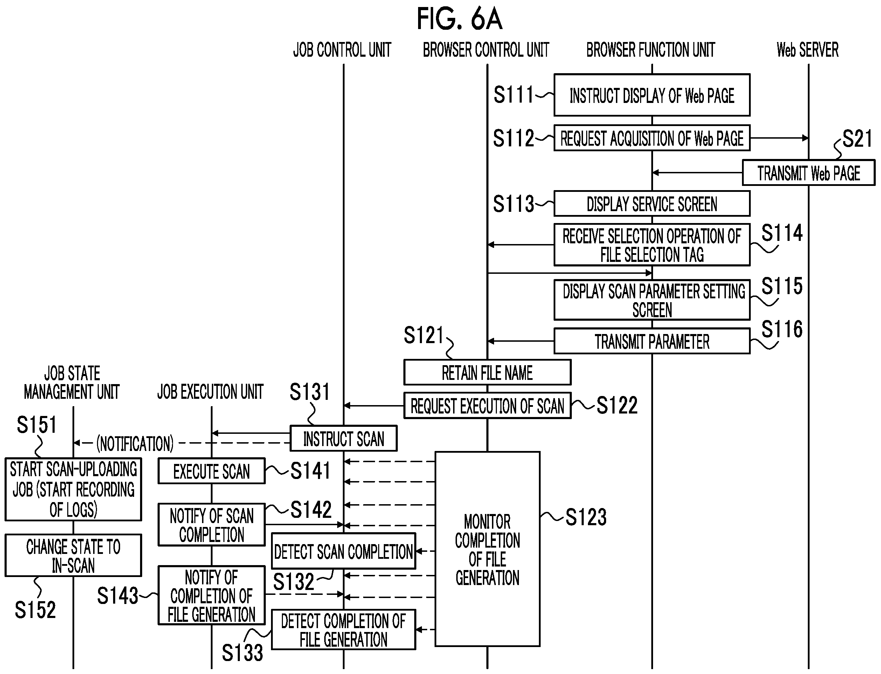

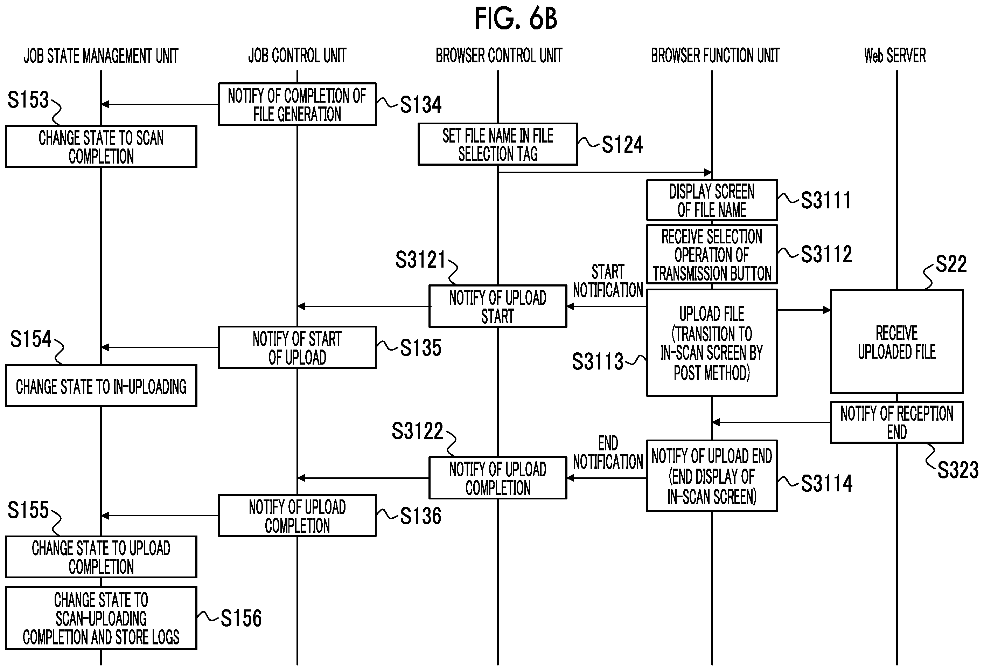

Figs. 5A to 5E are diagrams showing transitions of screens displayed on the operation panel of the multifunctional machine 10 in the present exemplary embodiment. Figs. 6A and 6B are sequence diagrams showing a series of processes of generating and uploading scan data in the present exemplary embodiment. A series of processing of uploading a file from the display of the Web page in the present exemplary embodiment will be described below with reference to Figs. 5A to 6B. In Figs. 6A and 6B, the same processes as in Figs. 2A and 2B are given the same step number, and the description thereof will be omitted as appropriate. Fig. 2A and Fig. 6A are the same drawings.

As shown in Fig. 6B, the processing (Step S124) of setting the file name of the scan data to the file selection tag by the browser control unit 12 may be the same as in the first exemplary embodiment. However, since the screen displayed on the operation panel is different until then, the description will be made on this point.

Fig. 5A is a diagram showing an example of a submenu screen 80 displayed on the operation panel by selecting, for example, a "+add new" button 42 of the service screen 40 shown in Fig. 3B in the present exemplary embodiment. In the submenu screen 80, a file selection button 82 (first button) displayed based on the file selection tag and a transmission button 84 (second button) displayed based on the transmission tag are displayed. A display region is provided between the buttons 82 and 84. In Fig. 5A, an example in which a message 86 of "not selected" is displayed in the display region is shown. This message 86 indicates that the file as an uploading target is not selected literally, as in the related art.

In a case where the file selection button 82 is selected by the user from the submenu screen 80 shown in Fig. 5A (Step S114), the browser function unit 11 acquires the scan parameter setting screen 90 shown in Fig. 5B from the Web server 2 and displays the scan parameter setting screen 90 in response to the user operation (Step S115). The user sets a parameter including a file name of a file generated by scan from the scan parameter setting screen 90. The file name 94 is set by user designation or automatic assignment as in the first exemplary embodiment. In a case where a start button 92 is selected, the job execution unit 14 starts the execution of the scan (Step S141).

During the execution of the scan, the scan parameter setting screen 90 shown in Fig. 5B may be displayed as it is as an in-processing screen. A screen shown in Fig. 3E may be displayed as the in-processing screen. In this manner, since the transmission button 84 is not displayed until the generation of the file by the scan is ended, the user does not operate the transmission button 84 before the generation of the file is ended.

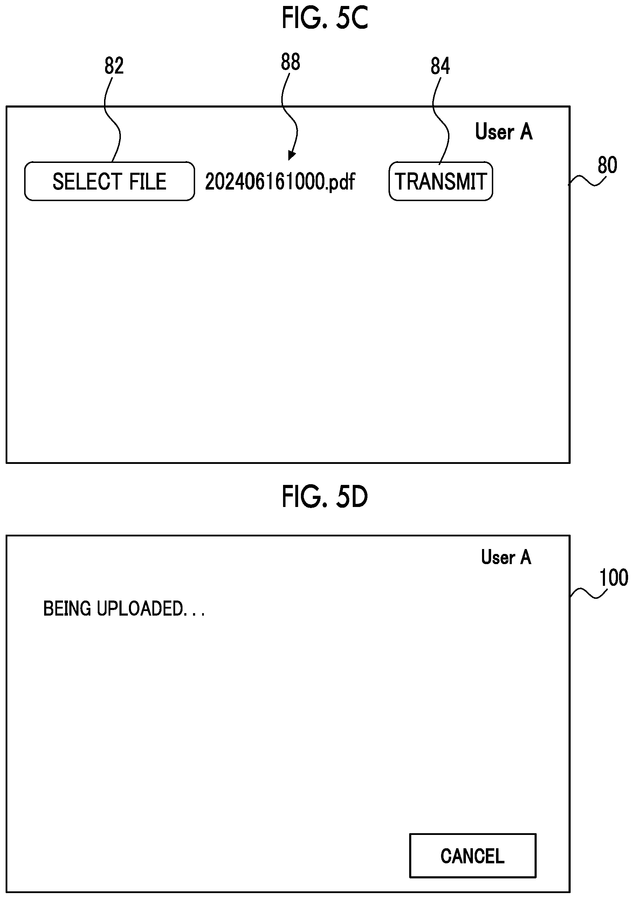

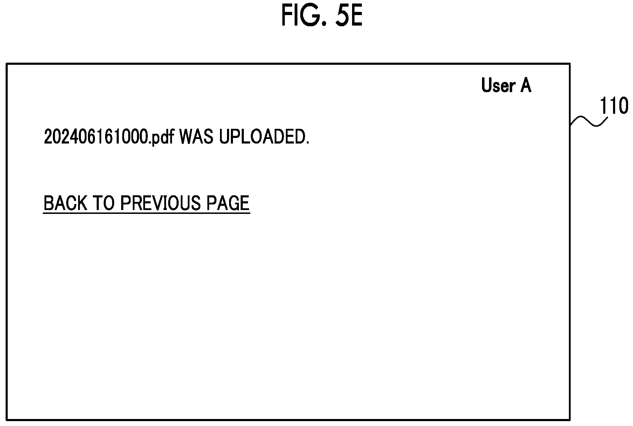

However, since the setting of the scan parameter is ended, the display of the screen may be controlled to switch to another screen. For example, the display of the scan parameter setting screen 90 may be stopped, and the submenu screen 80 shown in Fig. 5Amay be displayed again. The submenu screen 80 may be displayed as the in-processing screen. Incidentally, in a case where the user selects a scan stop button 96 displayed on the scan parameter setting screen 90, the display of the scan parameter setting screen 90 is ended, and the screen displayed on the operation panel returns to the submenu screen 80 shown in Fig. 5A.

In the present exemplary embodiment, even though the file name is set from the scan parameter setting screen 90 before the execution of the scan, the browser control unit 12 only retains the file name in the file selection tag without setting the file name (Step S121). Therefore, in the display region of the submenu screen 80, the message 86 of "not selected" that is displayed when the submenu screen 80 is displayed is displayed until the file name is set in the file selection tag (that is, until the generation of the scan is not ended), but after the execution of the scan is started, the display of the message 86 of "not selected" functions as a message indicating that the file as an uploading target is not yet generated.

The fact that the submenu screen 80 is displayed on the screen may mean that the transmission button 84 is displayed on the screen and is in an operable state. However, the user can see the message 86 of "not selected" and determine that the file name as the uploading target is not set and thus it is not possible to perform transmission, and thus it is inferred that the user does not operate the transmission button 84. In the present exemplary embodiment, the user is caused to suppress the operation on the transmission button 84 by the message 86 displayed on the submenu screen 80 as described above.

A message meaning that the generation of the file to be transmitted by the scan has not yet been ended may be superimposed and displayed on the message 86 of "not selected" on the submenu screen 80.

Even though the transmission button 84 is operated before the generation of the file is ended, the file name is not set in the file selection tag, and thus an error message is displayed by the browser, and the file is not uploaded in an unfinished state.

Then, in a case where the generation of the file is ended, the browser control unit 12 sets the file name in the file selection tag (Step S124). As a result, the browser function unit 11 displays the file name 88 of the generated file in the display region of the submenu screen 80 as shown in Fig. 5C (Step S3111).

Subsequently, in a case where the user selects the transmission button 84 from the submenu screen 80, the browser function unit 11 receives the selection operation (Step S3112). In a case where the transmission button 84 is selected, the browser function unit 11 starts uploading of the file as in the two-stage operation in the related art (Step S3113). In addition, the browser function unit 11 displays an in-uploading screen 100 shown in Fig. 5D and notifies the browser control unit 12 of the start of the upload. The browser control unit 12 receives the notification from the browser function unit 11 and notifies the job control unit 13 of the start of the upload (Step S3121).

Thereafter, in a case where the end of the reception is notified from the Web server 2 (Step S323), the browser function unit 11 displays an upload end screen 110 shown in Fig. 5E and notifies the browser control unit 12 of the end of the upload (Step S3114). The browser control unit 12 receives the notification from the browser function unit 11 and notifies the job control unit 13 of the end of the upload (Step S3122).

As described above, even in a case where the upload of the file generated by the scan is realized by the two-stage operation in which the user operates both the file selection button 82 and the transmission button 84, it is possible to prevent uploading of the file in a state of being non-existent or being incomplete.

Hereinafter, modification examples of the present exemplary embodiment will be described.

In the above description, it has been described that the submenu screen 80 shown in Fig. 5A may be used as the in-processing screen during the execution of the scan. However, in this case, the transmission button 84 is actually displayed on the screen in an operable state.

Thus, during a period in which the generation of the file has not yet been ended, an opaque display element may be superimposed and displayed on at least the display portion of the transmission button 84 on the display screen. As a result, the transmission button 84 is in an invisible state, that is, not in a state where the user can operate the transmission button 84, and thus it is possible to prevent uploading of the file in a state of being non-existent or being incomplete.

As an example of displaying the transmission button 84 in an invisible state, the in-processing screen 60 shown in Fig. 3E may be displayed as the in-processing screen as described above. However, since the in-processing screen 60 covers the entire screen of the operation panel, it is not possible to display other information or the like or to cause the user to perform any operation. Therefore, in the present exemplary embodiment, it is possible to effectively use the display screen during the execution of the scan.

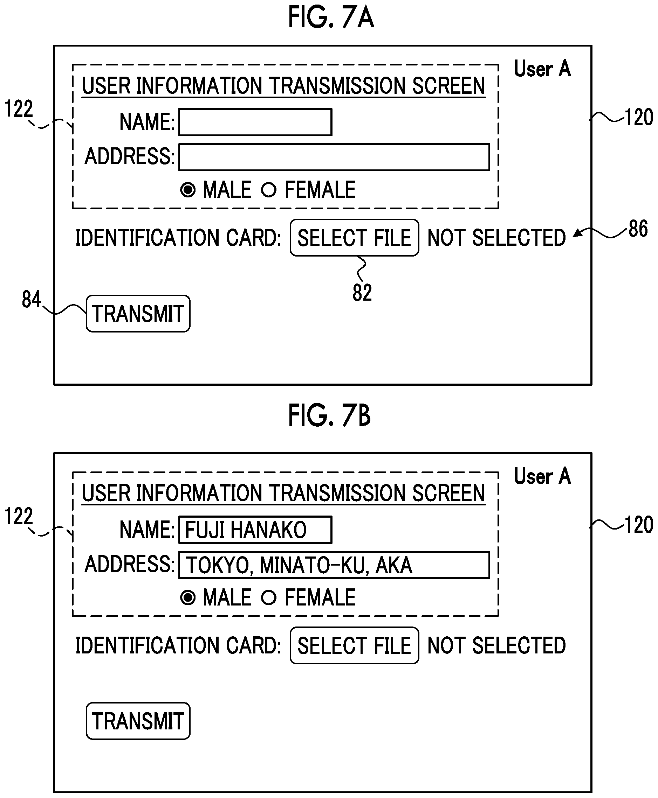

Figs. 7A to 7C are diagrams showing transitions of screens displayed on the operation panel of the multifunctional machine 10 in the present exemplary embodiment. Fig. 7A shows a display example of a user information transmission screen 120. In the user information transmission screen 120, the file selection button 82, the transmission button 84, and the message 86 are displayed, similarly to the submenu screen 80 shown in Fig. 5A. That is, the user information transmission screen 120 is displayed by selecting the "+add new" button 42 on the service screen 40 shown in Fig. 3B, as in the submenu screen 80, and is a screen having the same functions of file selection and transmission as the submenu screen 80. In the user information transmission screen 120, a setting region 122 is provided in a display region other than the display elements similar to the submenu screen 80. In the setting region 122, setting input fields of user information, specifically, a name, an address, and a gender are displayed.

The user information transmission screen 120 is displayed even after the execution of the scan is started from the scan parameter setting screen 90, and can receive a user operation on the setting region 122. Therefore, the user can set the user information from a region other than the regions in which the buttons 82 and 84 are displayed, that is, the setting region 122, instead of simply waiting for the end of the generation of the file without doing anything. In the user information transmission screen 120, the opaque display element may be superimposed and displayed on the transmission button 84 to be in an invisible state.

Fig. 7B shows the user information transmission screen 120 when the input of the user information by the user is not ended and the generation of the file is not yet ended. As shown in Fig. 7B, the message 86 indicating that the file as the uploading target is not yet generated is displayed on the user information transmission screen 120.

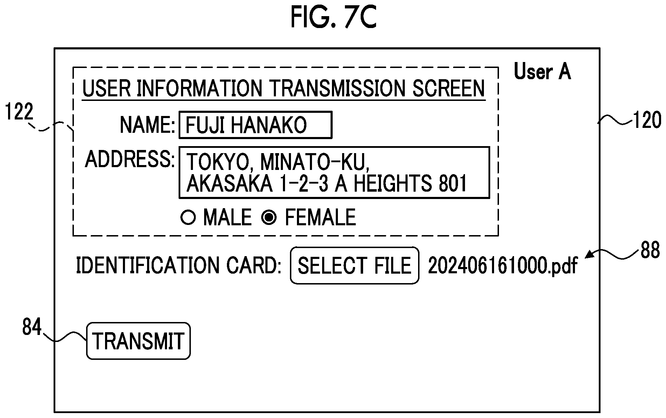

Fig. 7C shows the user information transmission screen 120 when the input of the user information by the user is ended and the generation of the file is ended. As shown in Fig. 7C, it can be seen that the generation of the file is ended after the display in the predetermined display region is updated from the message 86 to the file name 88.

When the transmission button 84 is made to be in an invisible state by superimposing and displaying the opaque display element, the display element is removed to make the transmission button 84 be in a visible state. Thereafter, the user can start the upload of the file generated by the scan by selecting the transmission button 84 at an intended timing.

By the way, the handling of the input setting user information is optional. For example, the user information may be uploaded to the Web server 2 or may be retained inside the Web server 2 in the same manner as the file. Alternatively, in consideration of a case where the input of the user information is not ended, the setting region 122 may be continuously displayed on the in-uploading screen so that the input of the user information can be continued.

In the above description, the multifunctional machine 10 has been described as an example of the information processing system, but the present invention is not limited to the multifunctional machine 10. As the information processing system, it is possible to realize the information processing system by causing a computer such as a PC to cooperate with the multifunctional machine 10 including a scanner or externally attaching a scanner to the PC or the like. In addition, a Web page may be acquired from a Web server by using a mobile device with a camera or the like, and a file (for example, a still image or a video newly captured) that is newly generated in response to a user operation on a predetermined button displayed based on the Web page may be uploaded.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

### (Supplementary Notes)

(((1))) An information processing system comprising:
   a processor configured to:
   start generation of a file in response to a user operation on a first button displayed based on a web page; and
   set a file name of the file in a predetermined tag in the web page to make the file be in a state of being uploadable, in a case where an end of the generation of the file is detected.
(((2))) The information processing system according to (((1))),
   wherein the uploading of the file is started in response to a user operation on a second button displayed based on the web page after the file name of the file is set in the predetermined tag.
(((3))) The information processing system according to (((2))), wherein the processor is configured to:
   display a message indicating that the file has not yet been generated, together with the second button, during a period in which the generation of the file has not yet been ended.
(((4))) The information processing system according to (((2))) or (((3))), wherein the processor is configured to:
   superimpose and display an opaque display element on at least a display portion of the second button on a display screen during a period in which the generation of the file has not yet been ended.
(((5))) The information processing system according to (((4))), wherein the processor is configured to:
   receive a user operation on a display region other than the opaque display element on the display screen during the period in which the generation of the file has not yet been ended.
(((6))) The information processing system according to (((1))),
   wherein the uploading of the file is automatically started in accordance with the setting of the file name of the file in the predetermined tag.
(((7))) The information processing system according to (((6))), wherein the processor is configured to:
   detect an end of the uploading by monitoring an execution state of the automatically started uploading.
(((8))) The information processing system according to (((6))), wherein the processor is configured to:
   acquire notifications of a start and an end of the uploading executed with the setting of the file name of the file in the predetermined tag from a web browser that processes the web page.
(((9))) A program causing a computer to realize:
   a function of starting generation of a file in response to a user operation on a first button displayed based on a web page; and
   a function of setting a file name of the file in a predetermined tag in the web page to make the file be in a state of being uploadable, in a case where an end of the generation of the file is detected.

According to (((1))), it is possible to avoid uploading of a file in an unfinished state in a case where the file newly generated in response to a user operation on a predetermined button displayed based on a web page is uploaded.

According to (((2))), the user can start the file upload by himself/herself.

According to (((3))), the user can be prevented from operating the second button.

According to (((4))), when the file generation is not yet ended, it is possible to make the second button invisible so that it is not operated.

According to (((5))), when the second button cannot be operated, it is possible to allow the user to perform other operations on the display screen.

According to (((6))), the user does not need to perform any operations to upload a file.

According to (((7))), it is possible to detect the end of uploading by itself without receiving notifications from others.

According to (((8))), it is possible to detect a start and an end of an upload that is automatically started.

According to (((9))), it is possible to avoid uploading of a file in an unfinished state in a case where the file newly generated in response to a user operation on a predetermined button displayed based on a web page is uploaded.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

2: Web sever
4: network
10: multifunctional machine
11: browser function unit
12: browser control unit
13: Job control unit
14: job execution unit
15: Job state management unit
16: storage unit
121: communication monitoring unit

## Claims

1. An information processing system comprising:
a processor configured to:
start generation of a file in response to a user operation on a first button displayed based on a web page; and
set a file name of the file in a predetermined tag in the web page to make the file be in a state of being uploadable, in a case where an end of the generation of the file is detected.

2. The information processing system according to claim 1,
wherein the uploading of the file is started in response to a user operation on a second button displayed based on the web page after the file name of the file is set in the predetermined tag.

3. The information processing system according to claim 2, wherein the processor is configured to:
display a message indicating that the file has not yet been generated, together with the second button, during a period in which the generation of the file has not yet been ended.

4. The information processing system according to claim 2 or 3, wherein the processor is configured to:
superimpose and display an opaque display element on at least a display portion of the second button on a display screen during a period in which the generation of the file has not yet been ended.

5. The information processing system according to claim 4, wherein the processor is configured to:
receive a user operation on a display region other than the opaque display element on the display screen during the period in which the generation of the file has not yet been ended.

6. The information processing system according to claim 1,
wherein the uploading of the file is automatically started in accordance with the setting of the file name of the file in the predetermined tag.

7. The information processing system according to claim 6, wherein the processor is configured to:
detect an end of the uploading by monitoring an execution state of the automatically started uploading.

8. The information processing system according to claim 6, wherein the processor is configured to:
acquire notifications of a start and an end of the uploading executed with the setting of the file name of the file in the predetermined tag from a web browser that processes the web page.

9. A program causing a computer to realize:
a function of starting generation of a file in response to a user operation on a first button displayed based on a web page; and
a function of setting a file name of the file in a predetermined tag in the web page to make the file be in a state of being uploadable, in a case where an end of the generation of the file is detected.

10. An information processing method comprising:
starting generation of a file in response to a user operation on a first button displayed based on a web page; and
setting a file name of the file in a predetermined tag in the web page to make the file be in a state of being uploadable, in a case where an end of the generation of the file is detected.
